# EUROPÄISCHE PATENTANMELDUNG

(11) **EP 3 225 375 A1**
(43) Veröffentlichungstag der Anmeldung: **04.10.2017**
(21) Anmeldenummer: 16162761.7
(22) Anmeldetag: 30.03.2016
(51) Int. Cl.: B29C 45/14, B41M 5/24

(54) **KUNSTSTOFFFORMTEIL MIT FARBIGER UV-MARKIERUNG, VERFAHREN ZUR HERSTELLUNG EINER MARKIERUNG DES KUNSTSTOFFFORMTEILS SOWIE IN-MOULD-FOLIE MIT FOTOCHROMEN PIGMENTEN**

(71) Anmelder: Wirthwein AG, 97993 Creglingen (DE)
(72) Erfinder: WIRTHWEIN, Marcus, 97993 Creglingen (DE); SÖVER, Alexandru, 97993 Creglingen (DE)
(74) Vertreter: Stippl, Hubert

(57) **Zusammenfassung**

Kunststoffformteil, insbesondere Spritzgießteil, mit einem Grundkörper (2) sowie einer farbigen Dekorationsschicht, wobei als Dekorationsschicht eine Dekorationsschicht vorgesehen ist, die im In-Mould-Verfahren mit dem Grundkörper (2) verbunden ist, und innerhalb des Grundmaterials der Dekorationsschicht farblose Pigmente fein verteilt vorliegen, die bei selektiver Bestrahlung mit UV-Laserlicht einen die Dekoration bedingenden, auf den selektiven Bereich begrenzten Farbumschlag bewirken.

## Beschreibung

Die vorliegende Erfindung betrifft ein Kunststoffformteil gemäß dem Oberbegriff des Anspruchs 1. Des Weiteren betrifft die vorliegende Erfindung ein Verfahren zur Herstellung eines Kunststoffformteils gemäß dem Oberbegriff des Anspruchs 19. Ferner betrifft die vorliegende Erfindung eine In-Mould-Folie.

### Technologischer Hintergrund

Kunststoff ist im täglichen Leben weit verbreitet und findet seine Anwendung in Haushaltsgeräten, Gegenständen des täglichen Bedarfs, Verpackung, Teilen von Automobilen sowie als innere Komponenten von Gegenständen und Geräten unterschiedlichster Art. Entsprechende Kunststoffteile sind üblicherweise mit Farbpimenten, zum Beispiel TiO2 für weiße Teile wie etwa Blenden für Waschmaschinen usw., versehen.

Die Oberfläche von Gegenständen bzw. Geräten aus Kunststoff werden häufig mit Markierungen versehen. Derartige Markierungen dienen unterschiedlichsten Zwecken. Beispielsweise werden Gegenstände markiert, um deren Verfolgbarkeit, insbesondere in der Einhaltung von ISO-Qualitätsstandards sicherzustellen. Die Markierung von Gegenständen aus Kunststoffen dient häufig auch dazu, im Sichtbereich eines Geräts Informationen an Bedienelementen, zum Beispiel an Drehknöpfen, Schaltern, Kipphebeln und dergleichen vorzusehen.

Zur Markierung von Kunststoffen gibt es vielfältige Methoden. Kunststoffe können zur Markierung mechanisch bearbeitet, zum Beispiel geritzt, oder thermisch bearbeitet, zum Beispiel heißgeprägt, werden, um eine Markierung in der Oberfläche des Kunststoffbauteils vorzusehen. Entsprechende Markierungen können auch mittels eines Lasers in die Oberfläche des Kunststoffbauteils oder des Gegenstands aus Kunststoff eingebracht werden. Hierbei wird der mit dem Laser beaufschlagte Oberflächenbereich zerstört und hierdurch die Markierung erzeugt. Solche Markierungen werden üblicherweise zum Aufbringen von Haltbarkeitsdaten (wie beispielsweise auf Joghurtbecher) und/oder Seriennummern aufgebracht. Aber auch Bedienteile, wie zum Beispiel Drehknöpfe von Waschmaschinen oder dergleichen, können dementsprechend markiert werden. Das Problem derartiger Markierungen besteht allerdings in der mangelnden Präzision sowie geringen Oberflächengüte. Bei Gegenständen des täglichen Bedarfs werden heutzutage höchste Anforderungen an deren Oberflächengüte gestellt. Da es sich um eine Zerstörung der Bauteiloberfläche handelt, führt diese Art von Markierung auch dazu, dass sich Schmutzpartikel im Bereich der Markierung ansammeln können, was die Ästhetik negativ beeinträchtigt. Für einen Gebrauchsgegenstand, wie zum Beispiel ein Bedienpanel einer Waschmaschine, ist eine derartige Markierung eher ungeeignet.

Eine Farbmarkierung von Kunststoffen kann durch das Einkoppeln von Laserlicht erfolgen, wobei der Energieeintrag durch den Laser zur Carbonisierung oder zum Aufschäumen eines Polymers führt, welches eine farbige Veränderung zur Folge hat. Hierzu werden Nd:YAG-Laser eingesetzt. Aufgrund der hohen Energie des Lasers führt diese Art von Lasermarkierung allerdings ebenfalls zu einer negativen Beeinträchtigung der Oberfläche des Kunststoffbauteils.

Eine farbige Markierung von Kunststoffteilen mittels Laser kann auch in Transfertechnik durch den Einsatz von Transferfolien vorgenommen werden. Hierbei wird eine Transferfolie auf der Oberfläche des Kunststoffbauteils positioniert. Mit Laserenergie wird hierbei das Markierungsmaterial von der Folie auf die Oberfläche des Kunststoffbauteils übertragen und verbindet diese dauerhaft miteinander. Hierdurch können Kunststoffteile vor allem auch nachträglich gekennzeichnet werden. Das Verfahren ist allerdings sehr aufwendig. Darüber hinaus ist diese farbige Lasermarkierung bei einem dauerhaften Einsatz nicht vor einer Verschlechterung des Erscheinungsbildes wegen mechanischer Beeinträchtigung geschützt. Auch gewährleistet diese Art der Farbmarkierung lediglich eine geringe Oberflächengüte.

### Druckschriftlicher Stand der Technik

Ein Kunststoffformteil gemäß dem Oberbegriff des Anspruchs 1 ist aus der DE 10 2006 036 367 A1 bekannt. Das Gerätegehäuse besteht hierbei aus zwei Gerätegehäuseteilen, wobei das an der Außenseite befindliche Gerätegehäuseteil transparent ausgeführt ist und an seiner dem inneren Gerätegehäuseteil zugewandten Seite eine Druckschicht, zum Beispiel eine im Siebdruck aufgebrachte Druckschicht, aufweist. Das weitere, nicht transparente Gerätegehäuseteil wird hinterspritzt oder auf die Innenseite des transparenten Gerätegehäuseteils aufgeklebt, so dass sich die Druckschicht zwischen den beiden Gerätegehäuseteilen befindet. Nach der Fertigmontage wird mittels eines Beschriftungslasers eine Beschriftung in die Druckschicht eingebracht, die zu einer lokalen Veränderung der Farbe oder zu einem lokalen Entfernen der Farbe in der Druckschicht und damit zu der gewünschten Markierung führt. Das Verfahren zur Herstellung dieses Kunststoffformteils ist aufwendig.

Aus der DE 10 2005 006 074 A1 ist eine Mehrschichtfolie zum Hinterspritzen mit einem flüssigen Kunststoff in einem In-Mould-Verfahren zur Herstellung eines dekorierten Spritzgussartikels hoher optischer Qualität und Gebrauchstüchtigkeit bekannt. Die Mehrschichtfolie weist mindestens eine strahlungsgehärtete Replizierlackschicht auf, die mindestens auf einer ihrer Oberflächen eine einen visuell wahrnehmbaren und/oder technischen Effekt erzeugende räumliche Struktur aufweist, wobei an mindestens einer Oberfläche mit räumlicher Struktur angrenzend zumindest bereichsweise eine Kontrastschicht angeordnet ist. Die Mehrschichtfolie kann eine mit Laser eingebrachte Markierung, insbesondere in Form von alphanumerischen Zeichen, geometrischen Mustern oder bildlichen Darstellungen aufweisen.

### Aufgabe der vorliegenden Erfindung

Die Aufgabe der vorliegenden Erfindung besteht darin, ein neuartiges Kunststoffformteil zur Verfügung zu stellen, welches bei vereinfachter Herstellbarkeit eine dauerhafte Farbmarkierung sowie eine besonders gute Oberflächengüte gewährleistet. Ferner soll ein Verfahren zur Herstellung eines entsprechenden Kunststoffformteils zur Verfügung gestellt werden.

### Lösung der Aufgabe

Die vorstehende Aufgabe wird durch ein Kunststoffformteil mit den Merkmalen des Anspruchs 1 sowie durch ein Verfahren mit den Merkmalen des Anspruchs 15 gelöst. Die vorliegende Erfindung betrifft ferner eine In-Mould-Folie.

Zweckmäßige Ausgestaltungen des erfindungsgemäßen Kunststoffformteils, des erfindungsgemäßen Verfahrens zu dessen Herstellung sowie der In-Mould-Folie sind in den Unteransprüchen beansprucht.

Dadurch, dass als Dekorationsschicht eine sogenannte In-Mould-Schicht vorgesehen ist, innerhalb deren Grundmaterials farblose, fotochrome Pigmente feinverteilt vorliegen, wird der Herstellungsprozess im Vergleich zum eingangs genannten Stand der Technik erheblich vereinfacht, da ein zusätzlicher Verfahrensschritt zum Bedrucken des äußeren Gehäuseteils, wie er beim Stand der Technik vorgesehen ist, entfällt. Es entfällt somit eine weitere Fügeschicht zwischen aus thermoplastischem Material bestehenden Grundkörper und Dekorationsschicht. Dadurch, dass sich die farblosen Pigmente homogen verteilt innerhalb des Grundmaterials der mit einer begrenzten Schichttiefe versehenen Dekorationsschicht befinden, wird eine begrenzte, exakt definierte Schichtdicke an Pigmenten in dem Kunststoffformteil realisiert. Überraschenderweise hat sich herausgestellt, dass hierdurch eine Farbmarkierung mit Tiefenwirkung von besonders hoher Qualität erzielbar ist. Die Bestrahlung mittels UV-Laserlicht beschränkt sich auf die In-Mould-Schicht, sodass Farbpigmente, wie zum Beispiel TiO2, im Grundkörper des Kunststoffformteils durch die UV-Laserbestrahlung nicht negativ beeinträchtigt und es so zu keinen Farbeinbußen im Grundkörper kommt. Des Weiteren ist die Farbmarkierung vor allem auch bei dauerhaftem Einsatz und mechanischer Beanspruchung vor Degradation sicher, da sie sich im Wesentlichen lediglich über die Schichtdicke der In-Mould-Schicht erstreckt. Aufgrund der Aktivierung des Farbumschlags mittels UV-Laserlicht wird, im Gegensatz zu herkömmlichen Lasermarkierungen, die Oberfläche des Kunststoffteils nicht beschädigt. Dies ergibt eine hervorragende Oberflächenqualität. Die Erfindung ermöglicht es, die Dekorationsschicht bei Bedarf sogar als vorgeformte 3D-Schicht bereit zu stellen und mit Kunststoff zu einem fertigen Kunststoffformteil zu hinterspritzen.

Besonders vorteilhaft ist es, als Dekorationsschicht eine sogenannte In-Mould-Folie zu verwenden. In dem Grundmaterial der Folie sind die Pigmente fein verteilt angeordnet. Die Tiefe der Markierung kann über die Schichtstärke der In-Mould-Folie, vorzugsweise über deren gesamte Schichtstärke, in dem Kunststoffformteil eingestellt werden.

Vorzugsweise befindet sich eine Hauptfläche der Dekorationsschicht an der Außenseite des Kunststoffformteils. Hierdurch wird ein besonders guter Eintritt des UV-Laserlichts ermöglicht.

Zweckmäßigerweise kann die Dekorationsschicht nur über einen Teilbereich der außenseitigen Oberfläche des Kunststoffformteils vorliegen. Demzufolge kann die In-Mould-Schicht lediglich auf den zu markierenden Oberflächenbereich begrenzt werden. Auch kann gemäß einer weiteren zweckmäßigen Ausgestaltung eine nahtlose, durchgehend bündige Oberfläche hergestellt und damit eine einheitliche Optik geschaffen werden.

Zweckmäßigerweise ist die Dekorationsschicht farblos oder amorph, wodurch sich keine Kontrastbildung beim Übergang des Grundkörpers zu den nicht belichteten Bereichen der Dekorationsschicht ergibt und ein einheitliches Erscheinungsbild erzielt werden kann.

Zweckmäßigerweise sind die Pigmente, obgleich selbst nicht unbedingt farblos, in feiner Verteilung in dem Grundmaterial der Dekorationsschicht untergebracht. Die Pigmente in der In-Mould-Schicht wirken überraschenderweise optisch nicht störend.

Wenn das Grundmaterial der Dekorationsschicht und das Grundmaterial des Grundkörpers übereinstimmende oder zumindest ähnliche Molekülstrukturen oder Molekülketten aufweisen, wird ein besonders gutes Ergebnis erreicht. Die In-Mould-Schicht haftet dann besonders gut am Grundkörper des Kunststoffformteils. Vorzugsweise sind das Grundmaterial der Dekorationsschicht sowie das Material des Grundkörpers in ihrer Polarität gleich, also entweder polar oder unpolar. Bevorzugt ist Polypropylen (PP) als Matrix für die In-Mould-Schicht bzw. Folie sowie für den Grundkörper vorgesehen. PP behindert einen Farbumschlag der Pigmente nicht.

Ganz besonders gute Markierungsergebnisse werden erreicht, wenn als Pigmente Diacetylen-Pigmente oder Pigmente auf Diacetylen-Basis verwendet werden. Diese Pigmente bieten eine besonders gute Verarbeitbarkeit in Zusammenhang mit dem Einsatz einer In-Mould-Dekorationsschicht. Des Weiteren wird eine erhöhte Farbechtheit und auch Farbbeständigkeit erreicht. Im Gegensatz zu vielen anderen Pigmenten halten Pigmente auf Diacetylenbasis höhere Temperaturen über einen kurzen Zeitraum, wie er beim Spritzgießen auftritt, aus. Deshalb sind diese Pigmente für das In-Mould-Verfahren besonders geeignet. Zudem ist es bei diesen Pigmenten nicht unbedingt notwendig, Photoinitiatoren einzusetzen.

Vorzugsweise handelt es sich bei den Pigmenten auf Diacetylen-Basis um solche, die zur Auslösung des Farbumschlags durch Bestrahlung mit UV-Laserlicht vorher erhitzt und wieder abgekühlt werden müssen. Diese "Aktivierung" der Pigmente kann vorteilhaft während der Herstellung der In-Mould-Schicht erfolgen. Die Pigmente sind somit aktiviert, sobald die In-Mould-Schicht hergestellt worden ist. Zweckmäßigerweise wird in Verbindung mit diesem Diacetylen eine UV-Schutzschicht nachträglich auf das Kunststoffformteil aufgebracht.

Alternativ handelt es sich bei den Pigmenten auf Diacetylen-Basis um solche, die zur Auslösung des Farbumschlags gleichzeitig Hitze sowie UV-Laserlicht ausgesetzt werden müssen. Diese Pigmente bewirken eine besonders gute Stabilität des Kunststoffformteils gegen Hintergrund-UV-Strahlung. Ferner benötigt eine Dekorationsschicht mit diesen Pigmenten keine UV-Schutzschicht auf der Außenseite des Kunststoffformteils.

Zweckmäßigerweise handelt es sich bei Pigmenten auf Diacetylen-Basis um Diacetylen mit der allgemeinen Formel R-HNOC-(CH₂)n-C≡C-C≡C-(CH₂)n-CONH-R bzw. mit der chemischen Formel CₓH_{y}N₂O₂, wobei x eine Zahl von 8 bis 52 (oder mehr) und y eine Zahl von 8 bis 96 (oder mehr) ist.

Als ganz besonders wirksam, insbesondere für eine Rotmarkierung, hat sich das Pigment auf Diacetylen-Basis D318 mit der chemischen Formel C₄₈H₈₈N₂O₂ erwiesen. Es handelt sich hierbei um folgende chemische Monomerstruktur:

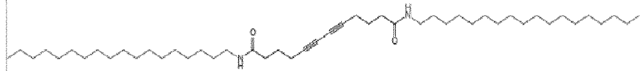

Als ganz besonders wirksam, insbesondere für eine Blaumarkierung, hat sich das Pigment auf Diacetylen-Basis D816 erwiesen. Hierbei handelt es sich um C₅₄H₁₀₀N₂O₂ mit der folgenden Monomerstruktur:

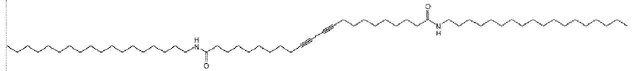

Eine besonders gute Verarbeitung dieser Pigmente läßt sich erzielen, wenn es sich bei dem Grundmaterial der Dekorationsschicht um ein Polyolefin, vorzugsweiseum Polypropylen handelt. Polypropylen ist nicht polar, aber semikristallin. Es eignet sich ganz besonders gut zur Verwendung mit Diacytelenen, insbesondere mit den beiden vorgenannten spezifischen Diacytelenen. Grundsätzlich sind lediglich solche Polyolefine zu verwenden, deren Verarbeitungstemperatur nicht über 220°C hinausgeht (insbesondere PP oder PLA).

Alternativ können für eine Farbmarkierung, vorzugsweise für eine Rot- und Blau-Markierung, als Pigmente auch Pigmente auf Leuco Dye-Basis verwendet werden. Der Vorteil dieser Pigmente liegt in deren guter thermischer Stabilität.

Als besonders wirksam, insbesondere für eine Rot-Markierung, hat sich das Pigment auf Leuco Dye-Basis mit der chemischen Formel C₄₂H₅₂N₂O₂ erwiesen.

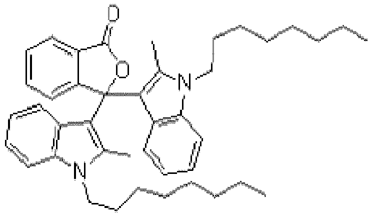

Als ganz besonders wirksam, insbesondere für eine Blau-Markierung hat sich das Pigment auf Leuco Dye-Basis mit der chemischen Formel C₄₃H₄₁N₃ erwiesen.

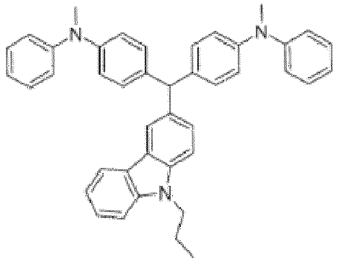

Gemäß einer alternativen Ausgestaltung der vorliegenden Erfindung kann als Grundmaterial der Dekorationsschicht auch Polystyrol eingesetzt werden. Polystyrol ist transparent, besitzt eine geringe Schwindungs- und Schrumpfungsneigung und ist daher besonders gut in Kombination mit dem Einsatz von Pigmenten geeignet. Es eignet sich besonders für den Einsatz in Zusammenhang mit einem Grundkörper aus ABS, welcher sehr häufig vorkommt.

Zweckmäßigerweise handelt es sich bei dem Grundmaterial aus Polyolefinen bzw. Polystyrol um amorphes Material.

Bei dem Material des Grundkörpers handelt es sich vorzugsweise um ABS oder PP oder PLA.

Zweckmäßigerweise ist das Material des Grundkörpers mit weißen Pigmenten versetzt, sodass das weiße Erscheinungsbild des Grundkörpers durch die vollständig oder lediglich in Teilbereichen an der Außenseite befindliche transparente Dekorationsschicht nicht beeinträchtigt wird.

Besonders gut für den vorliegenden Einsatzzweck eignen sich Pigmente, die vor der Bestrahlung mittels UV-Laserlicht zur Gewährleistung des Farbumschlags erst noch aktiviert werden müssen. Dies ist insofern von Vorteil, da die Pigmente während des In-Mould-Spritzgießverfahrens, bei dem erhöhte Temperaturen auftreten, keinen unerwünschten Farbumschlag erleiden. Vorzugsweise können auch wiederholt thermisch aktivierbare Pigmente eingesetzt werden. Diese sind reversibel aktivierbar, d.h. können also beliebig oft in den aufgeheizten Zustand überführt werden und sind dann aktiviert, während sie bei Raumtemperatur wieder in einen inaktiven Zustand übergehen.

Besonders gute Farbmarkierungsergebnisse konnten erzielt werden, wenn die Stärke der Dekorationsschicht bzw. der In-Mould-Folie im Bereich von 0,05 mm bis 1,0 mm, vorzugsweise im Bereich von 0,1 mm bis 0,5 mm besonders vorzugsweise im Bereich von 0,2 mm bis 0,4 mm, aufweist.

Besonders gute Ergebnisse werden erzielt, wenn der Pigmentanteil der Dekorationsschicht Pigmenten in Bezug auf die Folie in einem Bereich von 0,3 - 5 Gewichts-%, vorzugsweise von 0,5 - 4 Gewichts-%, besonders vorzugsweise von 1,0 - 2,0 Gewichts-% liegt.

Zweckmäßigerweise umfasst die Folie mindestens ein Additiv, welches die Eigenschaften der Farbbildung verbessert. Vorzugsweise kann ein UV-Photoinitiator zum Einsatz kommen, welcher den Farbumschlag durch die Bildung freier Radikale beschleunigt. Ferner kann vorzugsweise in Kombination damit ein weiterer UV-Photoinitiator eingesetzt werden, der nach dem Farbumschlag noch vorhandene freie Radikale absorbiert und so einen wirksamen UV-Schutz bewirkt. Letztere können in einem Gesamtanteil von 0,1 - 2,0, vorzugsweise 0,3 - 0,7 Gewichts-% beigefügt werden.

Die vorliegende Erfindung betrifft des Weiteren, auch nebengeordnet beansprucht, ein Verfahren zur Herstellung eines Kunststoffformteils gemäß den Merkmalen des Anspruchs 19. Dadurch, dass sich gemäß dem erfindungsgemäßen Verfahren die fotochromen Pigmente lediglich innerhalb der In-Mould-Folie befinden, also nicht im Grundkörper des Kunststoffformteils vorhanden sind, wird einerseits eine Degradation der Farbpigmente des Grundkörpers, aufgrund des thermischen Einflusses während des Umspritzens zumindest weitgehend verhindert und dadurch eine Farbmarkierung mit einer weit besseren Farbechtheit erzielt als dies der Fall wäre, wenn die Pigmente unmittelbar im Grundmaterial enthalten wären. Andererseits werden die Weißpigmente in dem Grundkörper nicht durch das UV-Laserlicht negativ beeinträchtigt. Würde der gesamte Grundkörper mit fotochromen Pigmenten versehen werden, würde der Farbumschlag aufgrund des Einwirkens von UV-Laserlicht durch die im Grundkörper vorhandenen anderweitigen Pigmente, zum Beispiel Weißpigmente des Grundkörpers, behindert. Andererseits können die Weißpigmente des Grundkörpers nicht weggelassen werden, da in diesem Fall der Grundkörper durchsichtig wäre und daher die inneren Konstruktionsteile, zum Beispiel einer Waschmaschine oder dergleichen, an der Außenseite sichtbar wären.

Gemäß einer zweckmäßigen Variante der Erfindung wird das Kunststoffformteil, zumindest im Bereich der In-Mould-Folie, auf eine Soll-Temperatur aufgeheizt. Dies führt zu einer "Aktivierung" der betreffenden Pigmente, die bei Raumtemperatur auch bei Bestrahlung mit UV-Laserlicht nicht reagieren. Hierdurch können für den großtechnischen Produktionsprozess reproduzierbare Bedingungen geschaffen werden.

Zweckmäßig ist es ist es, wenn das Kunststoffformteil, zumindest im Bereich der In-Mould-Folie zur Aktivierung der Pigmente während der Einwirkung des UV-Laserlichts auf eine Temperatur T2 von mindestens 50°C erhitzt wird.

Vorzugsweise liegt die Soll-Temperatur in einem Bereich von 50°C bis 100°C, vorzugsweise von 60°C bis 80°C und besonders vorzugsweise 70°C, erhitzt.

Besonders geeignet für diese Art der Aktivierung ist es, wenn die In-Mould-Folie aus Polypropylen oder PLA besteht und Pigmente auf Diacetylen-Basis eingesetzt werden.

Vorzugsweise handelt es sich bei der Farbmarkierung um eine Markierung mit der Farbe Rot oder Blau.

Ferner betrifft die vorliegende Erfindung eine In-Mould-Folie nach einem der Ansprüche 25-28.

### Beschreibung der Erfindung anhand von Ausführungsbeispielen

Nachstehend wird die vorliegende Erfindung anhand von Ausführungsbeispielen näher erläutert. Es zeigen:
- Fig. 1: ein Beispiel eines erfindungsgemäßen Kunststoffformteils in Form einer Waschmaschinenblende;
- Fig. 2: eine Teilschnittdarstellung durch die Blende gemäß Fig. 1 im Bereich der Dekorationsschicht in stark vereinfacht Darstellungsweise,
- Fig. 3: eine vergrößerte Darstellung eines Oberflächenbereichs der Blende während der Markierung mit UV-Laserlicht,
- Fig. 4A: ein Beispiel der In-Mould-Folienherstellung gemäß einer ersten Ausgestaltung der vorliegenden Erfindung,
- Fig. 4B: ein Beispiel der Herstellung des Kunststoffformteils gemäß der ersten Ausgestaltung der vorliegenden Erfindung,
- Fig. 4C: ein Beispiel der Markierung des Kunststoffformteils gemäß Fig. 4B,
- Fig. 5A: ein Beispiel der Herstellung einer In-Mould-Folie gemäß einer weiteren Ausgestaltung der vorliegenden Erfindung,
- Fig. 5B: ein Beispiel der Herstellung des Kunststoffformteils gemäß der weiteren Ausgestaltung der vorliegenden Erfindung sowie
- Fig. 5C: ein Beispiel der Markierung des Kunststoffformteils gemäß Fig. 5B.

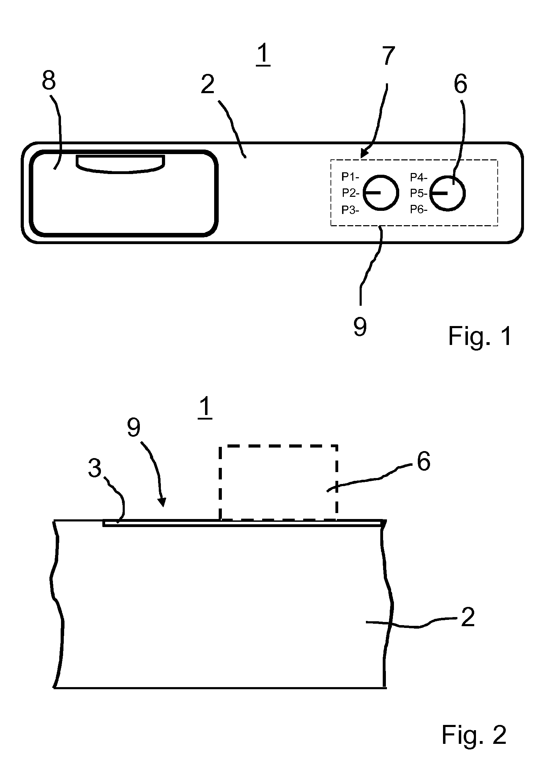

Bezugszeichen 1 in Fig. 1 bezeichnet ein erfindungsgemäßes Kunststoffformteil beispielsweise in Form einer Waschmaschinenbedienblende, die über Bedienelemente 6 in Form von Drehknöpfen sowie ein Waschmittelfach 8 verfügt. Im Bereich der Bedienelemente 6 sind farbige (zum Beispiel rote) Markierungen 7 in Form von Wählprogrammen P1-P6 vorgesehen. Das Kunststoffformteil 1 umfasst einen Grundkörper 2 aus Kunststoff sowie einen Dekorationsbereich 9, innerhalb dessen sich die Markierungen 7 befinden. Der Grundkörper 2 des Kunststoffformteils 1 besteht aus einem thermoplastischen Kunststoff, vorzugsweise aus ABS oder PP. Das Kunststoffmaterial des Grundkörpers 2 ist vorzugsweise mit weißen Pigmenten (zum Beispiel TiO2-Pigmenten) versetzt, sodass das Kunststoffformteil 1 eine weiße Farbe besitzt.

Wie aus Fig. 2 ersichtlich handelt es sich bei dem Dekorationsbereich 9 um eine Dekorationsschicht 3, die an der Oberfläche des Kunststoffformteils 1 vorzugsweise nahtlos und bündig in die Oberfläche des Grundkörpers 2 übergeht. Vorzugsweise handelt es sich bei der Dekorationsschicht 3 um eine sogenannte In-Mould-Folie, die während der Herstellung des Kunststoffformteils 1 mit Kunststoffmaterial des Grundkörpers 2 umgeben bzw. in einer Spritzgießmaschine umspritzt wird.

Die Dekorationsschicht 3 ist im unmarkierten Bereich vorzugsweise farblos, sodass sie in der Draufsicht des Kunststoffformteils 1 gemäß Fig. 1 in ihren Abmessungen mit bloßem Auge nicht erkennbar ist.

Erfindungsgemäß wird die Markierung 7 lediglich über die Schichttiefe der Dekorationsschicht 3 bzw. In-Mould-Folie vorgenommen. Die Markierung hat demzufolge eine begrenzte Tiefenwirkung.

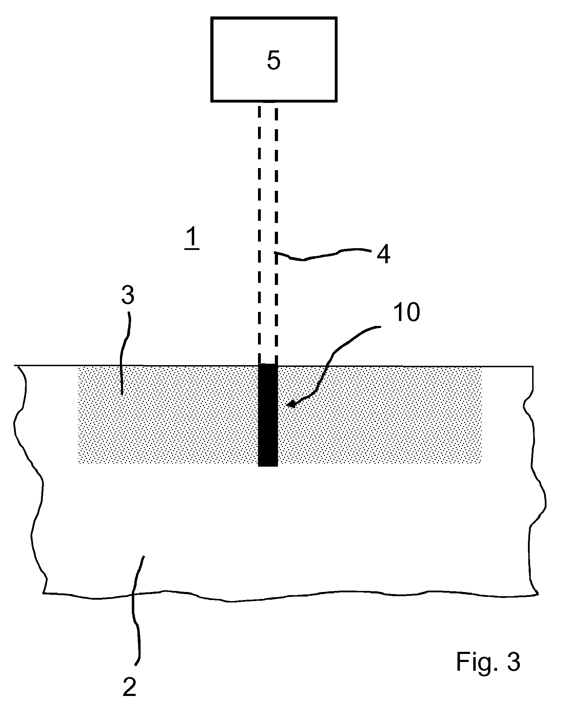

Fig. 3 zeigt in stark vereinfachter, vergrößerter Darstellungsweise das Erzeugen der Markierung 7 in die Dekorationsschicht 3. Die Dekorationsschicht 3 beinhaltet über deren Gesamtschichttiefe gleichmäßig verteilte Pigmente, die aufgrund der Einwirkung von UV-Laserlicht 4 eines UV-Lasers 5 einen lokal begrenzten, selektiven Farbumschlag 10 von einem amorphen in einen kristallinen Zustand erleiden. Dieser Farbumschlag 10 erstreckt sich über die gesamte Tiefe der Dekorationsschicht 3. Aufgrund der festgelegten Schichttiefe der Dekorationsschicht 3 und des Umspritzens mit Kunststoffmaterial des Grundkörpers 2 liegt somit eine exakt definierte, zugleich aber begrenzte Schichtdicke innerhalb des gesamten Kunststoffformteils 1 vor, die mit einer Markierung versehen werden kann. Insofern ergeben sich hierdurch für den großtechnischen Produktionsvorgang sehr gut reproduzierbare Bedingungen.

Vorzugsweise befindet sich die eine Hauptfläche der Dekorationsschicht 3 an der Außenseite des Kunststoffformteils 1 und bildet mit dem Grundkörper 2 des Kunststoffformteils 1 vorzugsweise eine nahtlose, bündige, ebene Oberfläche.

Die Dekorationsschicht 3 bildet den Dekorationsbereich 9 und erstreckt sich vorzugsweise, wie aus Fig. 1 und Fig. 2 ersichtlich, lediglich übereinen Teilbereich der Vorderseite des Kunststoffformteils 1.

Untersuchungen haben ergeben, dass im Rahmen des Einsatzes einer Dekorationsschicht 3 in Form einer In-Mould-Schicht bzw. In-Mould-Folie der Einsatz von Pigmenten auf Diacetylen-Basis überraschenderweise die Herstellung besonders farbechter Markierungen, vor allem in den Farben Rot oder Blau, mittels Bestrahlung mit UV-Laserlicht erzielbar ist.

Besonders vorteilhaft ist es, wenn die betreffenden Pigmente auf Diacetylen-Basis vor der Markierung mittels Bestrahlung mit UV-Laserlicht thermisch aktiviert werden. Dies bedeutet, dass diese Art von Pigmenten erhitzt werden, damit sie schmelzen und anschließend wieder erhärten, wodurch sie in einen aktivierten Zustand versetzt werden, d. h. in der Anlage sind, mit UV-Licht zu reagieren.

Die Aktivierung der Pigmente auf Diacetylen-Basis erfolgt zweckmäßigerweise während der Herstellung der Dekorationsschicht, vorzugsweise der In-Mould-Folie. Es ist daher vorteilhaft, dass im Rahmen der Herstellung der Dekorationsschicht bzw. In-Mould-Folie eine solche Aktivierung dieser Pigmente gleichzeitig erfolgen kann. Hinsichtlich der Ausbildung des Farbumschlags durch UV-Laserlicht-Bestrahlung gibt es zwei Alternativen. Bei bestimmten Pigmenten auf Diacetylen-Basis wird der Farbumschlag allein durch Einwirkung von UV-Laserlicht gewährleistet. Beispielsweise handelt es sich bei einem Diacetylen D816 (HT-HD) um ein entsprechendes Pigment. Das vorgenannte Diacetylen hat folgende molekulare Struktur:

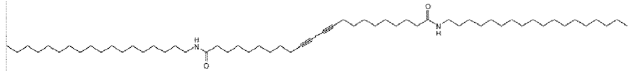

Alternativ können auch Pigmente auf Diacetylen-Basis verwendet werden, die einen Farbumschlag bei UV-Laserlicht-Bestrahlung nur dann bewirken, wenn Sie erhitzt und hierbei dem UV-Laserlicht ausgesetzt werden. Diese Diacetylene haben den Vorteil, dass sie besonders stabil gegen Hintergrund-UV-Strahlung sind. Dies bedeutet, dass die betreffenden Kunststoffformteile während der Beaufschlagung mit UV-Laserlicht gleichzeitig auf eine Temperatur im Bereich von 50°C bis 100°C erhitzt werden müssen. Bei einem Diacetylen D318 (C₄₈H₈₄N₂O₂) handelt es sich um ein entsprechendes Pigment. Das vorgenannte Diacetylen hat folgende molekulare Struktur:

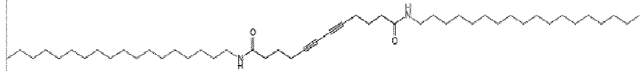

Anstelle von Pigmenten auf Diacetylen-Basis können im Rahmen der vorliegenden Erfindung auch Pigmente auf Leuco-Dye-Basis zum Einsatz kommen. Für eine Farbmarkierung in Rot eignet sich ganz besonders gut das Leuco Dye-Pigment CR5 (C₄₂H₅₂N₂O₂), welches folgende Strukturformel aufweist:

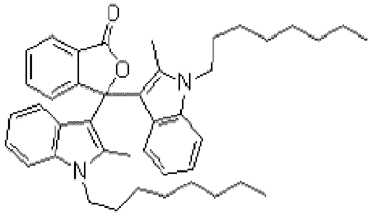

Für eine Blau-Markierung eignen sich besonders die Pigmente Leuco Dye-Basis CB3 (C₄₂H₅₂N₂O₂) mit folgender Strukturformel: 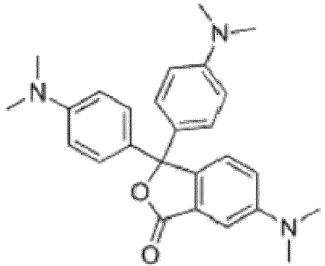 sowie CB4 (C₄₃H₄₁N₃) mit folgender Strukturformel:

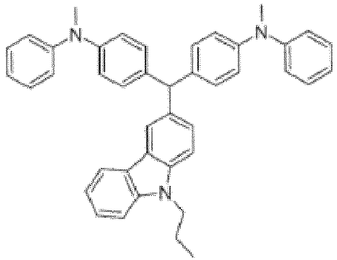

Um den Farbumschlag sowie die Farbbeständigkeiten vor allem bei der Verwendung von Pigmenten auf Leuco Dye-Basis noch zu steigern, kann mindestens ein sogenannter UV-Stabilisator vorgesehen sein, welcher die UV-Strahlung absorbiert und/oder die Bildung freier Radikale verhindert. Bei einem solchen UV-Stabilisator handelt es sich zweckmäßigerweise um 2-Isopropylthioxanthone. Dieser UV-Stabilisator bewirkt einen UV-Schutz, in dem freie Radikale, die noch übrig sind, absorbiert werden und somit nicht mehr reagieren können. Ferner kann ggf. in Kombination zu dem vorgenannten UV-Stabilisator auch ein UV_Photoinitiator auf der Basis eines Reaktionsprodukts von Bis[4-(diphenylsulfonio)phenyl]sulfide bis (hexaflourophosphate) und Phosphate(1-),hexafluro-, diphenyl[(phenylthio)phenyl]sulfonium. eingesetzt werden. Dieser UV-Photoinitiator bewirkt eine Beschleunigung des Farbumschlags durch Bildung freier Radikale. Die UV-Photoinitiatoren kommen vorzugsweise in einem Bereich von 0,2 - 0,5 Gewichts-% und die UV-Stabilisatoren vorzugsweise in einem Bereich von 0,3 - 0,6 Gewichts-% zum Einsatz.

Was die Dicke der Dekorationsschicht 3 anbelangt, so haben Untersuchungen ergeben, dass diese zweckmäßigerweise im Bereich von 0,05 mm bis 1,0 mm, vorzugsweise im Bereich von 0,1 mm bis 0,5 mm, besonders vorzugsweise im Bereich von 0,2 mm bis 0,4 mm, liegt.

Was den Anteil an Pigmenten in Bezug auf die Dekorationsschicht 3 anbelangt, so liegt dieser in einem Bereich von 0,3 - 5 Gewichts-%, vorzugsweise von 0,5 - 4 Gewichts-%, besonders vorzugsweise von 1,0 - 2,0 Gewichts-%.

Zweckmäßigerweise handelt es sich bei der Dekorationsschicht 3 hinsichtlich deren Grundmaterials um Polystyrol oder Polyolefin, vorzugweise Polypropylen.

Zur Markierung der Dekorationsschicht 3 wird zweckmäßigerweise ein UV-Laser 5 verwendet, welcher eine Wellenlänge im Bereich von 300 nm bis 700 nm, bestenfalls 355 nm, aufweist.

Vorzugsweise kommt ein Laser zum Einsatz, dessen Impulsdauer im Pikosekunden-Bereich liegt, beispielsweise in einem Bereich von 200 - 400 ps.

Zweckmäßigerweise liegt die Wiederholungsrate des Lasers bei mindestens 300 kHz.

### Beispiel 1

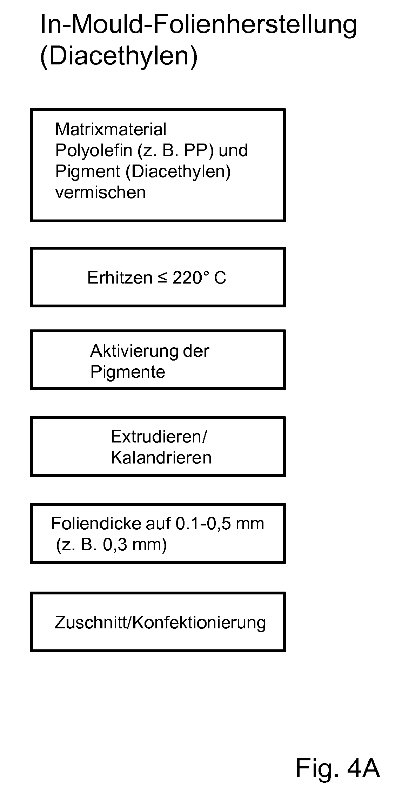

Wie in Fig. 4A dargestellt, wird zunächst das Grundmaterial für eine geeignete In-Mould-Folie bereitgestellt. Als Matrixmaterial für die In-Mould-Folie wird Polypropylen (PP) ausgewählt. PP weist folgende chemische Struktur auf

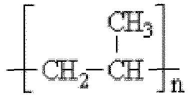

PP ist semikristallin und nicht polar. Verwendet wird das Produkt ISPLEN® PP 084 D2M von Repsol, welches die in Tabelle 1 aufgeführten Eigenschaften besitzt.

**Tabelle 1: Eigenschaften von PP als Matrixmaterial**

| Parameter | Einheit | Wert | Bedingung |
|---|---|---|---|
| Dichte | g/cm³ | 0.905 | |
| Massenfließrate (Schmelze) | g/10 min | 20 | 230°C, 2.16 kg |
| Wärmeformbeständigkeitstemperatur | °C | 85.0 | 0.45 MPa, ungetempert |
| Verfahrenstemperatur (Schmelze) | °C | 190 - 250 | |

Zunächst wird das Matrixmaterial (PP-Granulat) mit dem Pigment D318 vermischt und in den Extruder eingefüllt. Zur Herstellung der In-Mould-Folie wird das Gemisch im Extruder auf eine Temperatur von ≤ 220°C erhitzt. Hierbei wird das Pigment durch die vorherrschende hohe Temperatur der Schmelze "aktiviert". Das Pigment im Matrixmaterial liegt fein verteilt vor. Die Konzentration des Pigments in dem Matrixmaterial beträgt zum Beispiel 2,0 Gewichts-%.

In der nachfolgenden Tabelle 2 werden die Prozessparameter für die Extrusion der mit dem Pigment D318 versetzten In-Mould-Folie wiedergegeben.

**Tabelle 2: Prozessparameter für die Extrusion der In-Mould-Folie (PP)**

| Parameter | Einheit | Wert |
|---|---|---|
| Aufheizen | °C | 190 - 200 |
| Dosierung | kg/h | 2.5 |
| Rotationsgeschwindigkeit | 1/min | 60 - 90 |
| Folienproduktionsgeschwindigkeit | m/min | 0.75 |
| Foliendicke | µm | 300 |

Es wird eine In-Mould-Folie mit einer Foliendicke von zum Beispiel 0,3 mm hergestellt. Anschließend wird die In-Mould-Folie zugeschnitten bzw. konfektioniert.

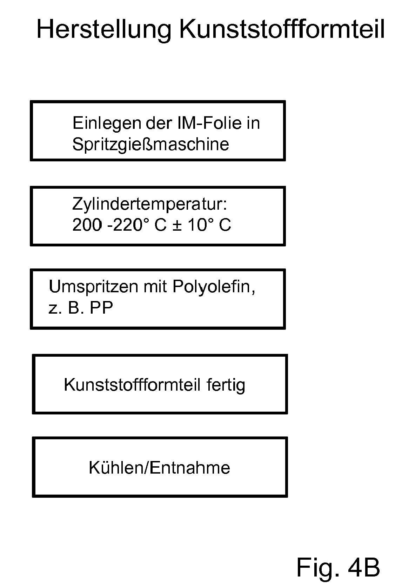

Wie es aus Fig. 4B ersichtlich ist, wird die bereitgestellte In-Mould-Folie kalt in eine Spritzgießmaschine eingelegt und bei einer Zylindertemperatur von 200-220°C +/- 10°C mit Polyolefin, vorzugsweise Polypropylen, welches mit einem Weißpigment, zum Beispiel TiO2-Pigmenten, versehen sein kann, umspritzt.

Die Prozessparameter für das Umspritzen der In-Mould-Folie zur Herstellung einer Blende für eine Waschmaschine sind aus Tabelle 3 ersichtlich. Die Prozessparameter können sich abhängig von dem herzustellenden Formteil und/oder verwendeten Material ändern.

**Tabelle 3: Prozessparameter für das Umspritzen der In-Mould-Folie mit PP**

| Parameter | Einheit | Wert | Toleranz |
|---|---|---|---|
| Schließkraft | kN | 3000 | ± 100 |
| Einspritzdruck | bar | 760 | ± 50 |
| Nachdruck | bar | 200 - 300 | |
| Zylindertemperatur | °C | 45, 200 - 220 | ±10 |
| Werkzeugtemperierung | °C | 65 | ±10 |

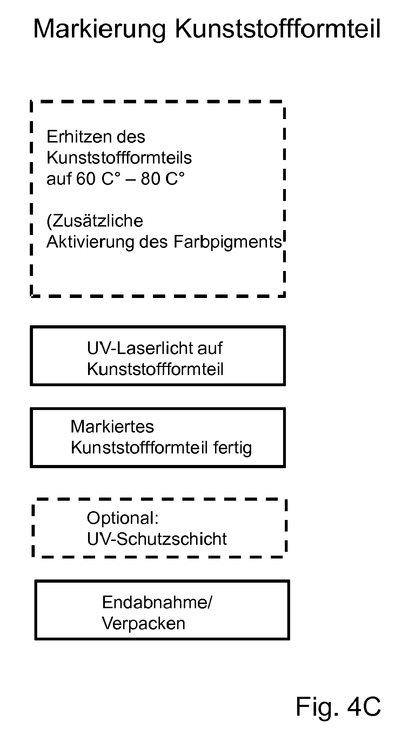

Gemäß Fig. 4C wird die farbige Markierung durch Belichtung der Oberfläche der In-Mould-Folie durch UV-Laserlicht selektiv vorgenommen.

Sofern anstelle eines nur durch thermische Behandlung aktivierbaren Farbpigments ein Farbpigment (zum Beispiel Diacetylen D318) verwendet wird, welches zu dessen Aktivierung während der UV-Belichtung auch erhitzt werden muss, so erfolgt die Erhitzung (vgl. gestrichelte Kästchen Alt. 2 in Fig. 4C) unmittelbar während der Markierung des Kunststoffformteils mittels UV-Laserlicht. Hierzu wird das Kunststoffformteil zumindest im Bereich der Dekorationsschicht, auf eine Temperatur von 50-100°C, vorzugsweise liegt die Soll-Temperatur in einem Bereich von 60°C bis 80°C und besonders vorzugsweise bei 70°C, während die Belichtung mit UV-Laserlicht erfolgt. Anschließend wird das Kunststoffformteil entnommen und verpackt.

Für die Bestrahlung mit UV-Laserlicht wurde ein Nd:YAG-Laser mit einer Wellenlänge von 355 nm, einer Impulsdauer im Pikosekunden-Bereich und einer Wiederholungsrate (Frequenz) von mindestens 300 kHz.

Die durch die Lasermarkierung erreichten CIELAB-Werte einer Rotmarkierung unter Verwendung von dem Pigment D318 sind in der nachstehenden Tabelle 4 wiedergegeben.

**Tabelle 4: CIELAB-Werte sowie Laserparameter**

| Markierung (Rot) | Laserleistung (W) | Overlap (DPI) | L*-Wert | a*-Wert | b*-Wert |
|---|---|---|---|---|---|
| Farbvorgabe | | | 51.4 | 39.7 | 19.4 |
| Markierung | 1.2 | 1200 | 40.0 | 30.9 | 20.3 |

Bei den CIELAB-Werten handelt es sich um eine objektive Farbqualitätsfestlegung gemäß EN ISO 11664-4 (Colorimetry -- Part 4: CIE 1976 L*a*b* Farbraum). Je näher die Einzelwerte L* a* b* an den Werten der Farbvorgabe liegen, desto besser ist das erreichte Markierungsergebnis. Bei dem Overlap handelt es sich um die konstante Anzahl der überlappenden Laserbildpunkte entlang einer Länge von einem Inch in x- sowie y-Richtung.

### Beispiel 2

Beispiel 2 betrifft eine Blau-Markierung unter Verwendung eines Pigments auf Diacetylen-Basis. Auch hier wird eine In-Mould-Folie mit Matrixmaterial PP verwendet. Bei dem Pigment auf Diacetylen-Basis handelt es sich um D8HT (Diacetylen-8-Propargylamin) mit folgender Struktur:

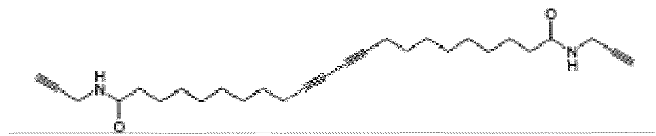

Die In-Mould-Folie enthält 1 Gewichts-% D8HT und wird bei 200°C produziert.

Bei D8HT handelt es sich um ein Pigment, welches zu dessen Aktivierung erhitzt werden muss. Die Aktivierung erfolgt bei diesem Pigment im Rahmen der Herstellung der In-Mould-Folie durch die hohe Temperatur der Schmelze in dem Extruder (vgl. Fig. 4A).

Zur Erhöhung der UV-Stabilität wird auf die Oberfläche des markierten Kunststoffformteils eine UV-Schutzschicht aufgebracht.

Die durch die Lasermarkierung erreichten CIELAB-Werte der Blau-Markierung unter Verwendung von dem Pigment D8HT sind in der nachstehenden Tabelle 5 wiedergegeben.

**Tabelle 5: CIELAB-Werte sowie Laserparameter**

| Markierung (Blau) | Laserleistung (W) | Overlap (DPI) | L*-Wert | a*-Wert | b*-Wert |
|---|---|---|---|---|---|
| Farbvorgabe | | | 49.6 | -10.9 | -32.9 |
| Markierung | 3.0 | 1100 | 44.6 | -2.0 | -14.9 |

### Beispiel 3

Beispiels 3 betrifft den Einsatz eines Pigments auf Leuco Dye-Basis für die UV-Farbmarkierung.

Pigmente auf Leuco Dye-Basis sind ganz besonders gut bei einem Grundkörper aus ABS einzusetzen, da sie gut in einer Dekorationsschicht, d.h. In-Mould-Folie, aus Polystyrol verarbeitet werden können.

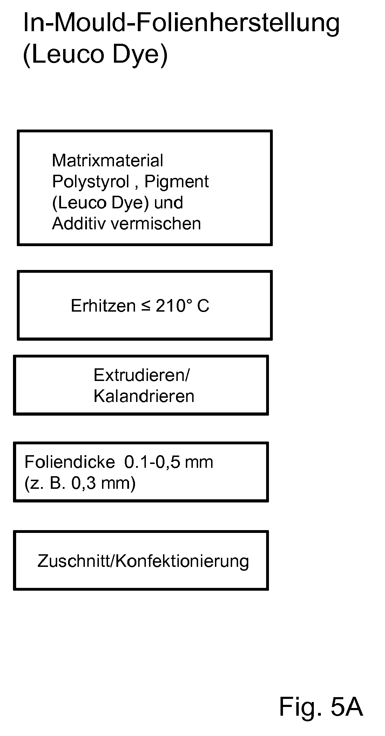

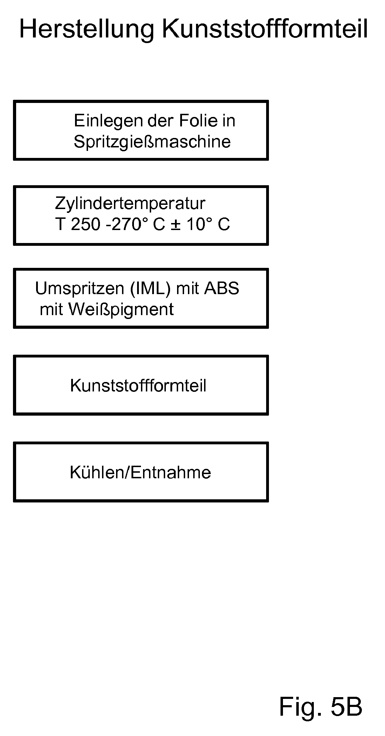

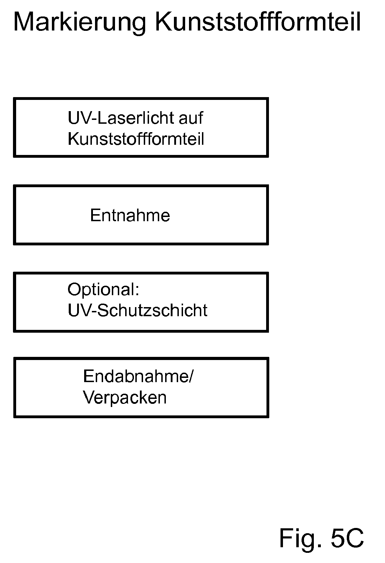

Im Zusammenhang mit derartigen Pigmenten eignet sich als Matrixmaterial für die In-Mould-Folien-Herstellung besonders Polystyrol. In dem Ausgangsmaterial der Polystyrol-Folie ist 1 Gewichts-% CR5, 0,3 Gewichts-% Speedcure 992s und 0,4 Gewichts-% Speedcure 2-ITX vorhanden. Die In-Mould-Folie wird bei einer Temperatur von unterhalb 210°C, vorzugsweise unterhalb 200°C, mit einer Foliendicke von ca. 0,3 mm extrudiert (vgl. Fig. 5A).

Die In-Mould-Folie wird anschließend kalt in die Spritzgießmaschine eingelegt und bei einer Zylindertemperatur von 250-270°C +/- 10°C mit ABS, welches vorzugsweise Weiß-Pigmente beinhaltet, umspritzt.

Die Prozessparameter für das Umspritzen der In-Mould-Folie sind aus Tabelle 6 ersichtlich. Die Prozessparameter können sich abhängig von dem herzustellenden Formteil und/oder dem verwendeten Material ändern.

**Tabelle 6: Prozessparameter für das Umspritzen der In-Mould-Folie (PS)**

| Parameter | Einheit | Wert | Toleranz |
|---|---|---|---|
| Schließkraft | kN | 3000 | ± 100 |
| Einspritzdruck | bar | 1350 | ± 50 |
| Nachdruck | bar | 450 - 650 | |
| Zylindertemperatur | °C | 45, 250 - 270 | ±10 |
| Werkzeugtemperierung | °C | 65 | ±10 |

Anschließend wird das Kunststoffformteil mit UV-Laserlicht selektiv markiert. Im Anschluss daran wird auf die Vorderseite des Kunststoffformteils eine UV-Schutzschicht, beispielsweise durch eine aufgesprühte UV-Schutzschicht, versehen.

Die durch die Lasermarkierung erreichten CIELAB-Werte einer Rot-Markierung unter Verwendung von dem Pigment CR5 sind in der nachstehenden Tabelle 7 wiedergegeben.

**Tabelle 7: CIELAB-Werte sowie Laserparameter**

| Lasermarkierung (Rot) | Leistung (W) | Overlap (DPI) | L*-Wert | a*-Wert | b*-Wert |
|---|---|---|---|---|---|
| Farbvorgabe | | | 51.4 | 39.7 | 19.4 |
| Markierung | 16.5 | 1100 | 51.9 | 38.8 | -4.9 |

Die oben genannten Werte zeigen, dass mittels Verwendung eines Pigments auf Leuco Dye-Basis eine gute Rot-Markierung erzielbar ist, wobei lediglich der b*-Wert etwas abweicht.

### BEZUGSZEICHENLISTE

- 1: Kunststoffformteil
- 2: Grundkörper
- 3: Dekorationsschicht
- 4: UV-Laserlicht
- 5: UV-Laser
- 6: Bedienelement
- 7: Markierung
- 8: Waschmittelfach
- 9: Dekorationsbereich
- 10: Farbumschlag

## Patentansprüche

1. Kunststoffformteil, insbesondere Spritzgießteil, mit einem, vorzugsweise mit Farbpigmenten versehenen, Grundkörper (2) sowie einer mit einer Farbmarkierung (7) versehenen Dekorationsschicht (3), **dadurch gekennzeichnet, dass**
die Dekorationsschicht (3) im In-Mould-Verfahren mit dem Grundkörper (2) verbunden ist, und
innerhalb des Grundmaterials der Dekorationsschicht (3) fotochrome Pigmente fein verteilt vorliegen, die bei selektiver Bestrahlung mit UV-Laserlicht einen die Farbmarkierung (7) bedingenden, auf den selektiven Bereich begrenzten Farbumschlag bewirken.

2. Kunststoffformteil nach Anspruch 1, **dadurch gekennzeichnet, dass** als Dekorationsschicht (3) eine In-Mould-Folie vorgesehen ist.

3. Kunststoffformteil nach Anspruch 1 oder 2, **dadurch gekennzeichnet, dass** die Dekorationsschicht (3) über einem Teilbereich der außenseitigen Oberfläche des Kunststoffformteils (1) vorliegt.

4. Kunststoffformteil nach mindestens einem der vorhergehenden Ansprüche, **dadurch gekennzeichnet, dass** die Dekorationsschicht (3) farblos oder amorph ist.

5. Kunststoffformteil nach mindestens einem der vorhergehenden Ansprüche, **dadurch gekennzeichnet, dass** das Grundmaterial der Dekorationsschicht (3) und das Grundmaterial des Grundkörpers (2) übereinstimmende oder zumindest ähnliche Molekülstrukturen oder Molekülketten aufweisen.

6. Kunststoffformteil nach mindestens einem der vorhergehenden Ansprüche, **dadurch gekennzeichnet, dass** als Pigmente
(a) Pigmente auf Diacetylen-Basis oder
(b) Pigmente auf Leuco Dye-Basis
vorgesehen sind.

7. Kunststoffformteil nach Anspruch 6, **dadurch gekennzeichnet, dass** es sich bei den Pigmenten auf Diacetylen-Basis um solche handelt, die zur Auslösung des Farbumschlags vor der Bestrahlung mit UV-Laserlicht erhitzt werden müssen.

8. Kunststoffformteil nach Anspruch 6, **dadurch gekennzeichnet, dass** es sich bei den Pigmenten auf Diacetylen-Basis um solche handelt, die zur Auslösung des Farbumschlags Hitze sowie UV-Laser gleichzeitig ausgesetzt werden müssen.

9. Kunststoffformteil nach Anspruch 6 oder 7, **dadurch gekennzeichnet, dass** es sich bei den Pigmenten auf Diacetylen-Basis um Molekülstrukturen mit der chemischen Formel CₓH_{y}N₂O₂ handelt, wobei x mindestens 8 und y mindestens 8 ist.

10. Kunststoffformteil nach mindestens einem der Ansprüche 6 bis 9 **dadurch gekennzeichnet, dass** es sich bei den Pigmenten auf Diacetylen-Basis um Diacetylen D318 handelt.

11. Kunststoffformteil nach mindestens einem der Ansprüche 6, 7 und 9, **dadurch gekennzeichnet, dass** es sich bei den Pigmenten auf Diacetylen-Basis um Diacetylen D816 handelt.

12. Kunststoffformteil nach mindestens einem der vorhergehenden Ansprüche, **dadurch gekennzeichnet, dass** es sich bei dem Grundmaterial der Dekorationsschicht (3) um eine Polyolefin, vorzugsweise um Polypropylen handelt.

13. Kunststoffformteil nach Anspruch 6, **dadurch gekennzeichnet, dass** es sich bei den Pigmenten auf Leuco Dye-Basis um C₄₂H₅₂N₂O₂ oder um C₄₃H₄₁N₃ handelt.

14. Kunststoffformteil nach mindestens einem der vorhergehenden Ansprüche 1-6 und 13, **dadurch gekennzeichnet, dass** es sich bei dem Grundmaterial der Dekorationsschicht (3) um Polystyrol handelt.

15. Kunststoffformteil nach mindestens einem der vorhergehenden Anspruch 1-7, 13 und 14, **dadurch gekennzeichnet, dass** es sich bei dem Grundmaterial des Grundkörpers um PP oder ABS handelt.

16. Kunststoffformteil nach mindestens einem der Ansprüche 6 und 13-15, **dadurch gekennzeichnet, dass** die Dekorationsschicht mindestens einen UV-Stabilisator umfasst, welcher UV Strahlung absorbiert und/oder die Bildung freier Radikale verhindert.

17. Kunststoffformteil nach mindestens einem der vorhergehenden Ansprüche, **dadurch gekennzeichnet, dass** der Anteil an Pigmenten in Bezug auf die Dekorationsschicht (3) in einem Bereich von 0,3 - 5 Gewichts-%, vorzugsweise von 0,5 - 4 Gewichts-%, besonders vorzugsweise von 1,0 - 2,0 Gewichts-% liegt.

18. Kunststoffformteil nach mindestens einem der vorhergehenden Ansprüche , **dadurch gekennzeichnet, dass** die Dekorationsschicht (3) eine Stärke im Bereich von 0,05 mm bis 1,0 mm, vorzugsweise im Bereich von 0,1 mm bis 0,5 mm, besonders vorzugsweise im Bereich von 0,2 mm bis 0,4 mm, aufweist.

19. Verfahren zur Herstellung einer Markierung eines Kunststoffformteils, insbesondere eines Spritzgießteil, welches einen Grundkörper (2) sowie eine Dekorationsschicht (3) mit einer mittels UV-Laserlicht eingebrachten Farbmarkierung (7) aufweist, vorzugsweise ein Kunststoffteil nach einem der vorhergehenden Ansprüche mit folgenden Verfahrensschritten
(a) Bereitstellen einer ein Grundmaterial umfassenden Dekorationsschicht (3), wobei innerhalb deren Grundmaterials farblose fotochrome Pigmente fein verteilt vorliegen, die bei selektiver Bestrahlung mit UV-Laserlicht durch einen die Dekoration bedingenden, auf den selektiven Bereich begrenzten Farbumschlag eine Farbmarkierung (7) bewirken,
(b) Umspritzen der Dekorationsschicht (3) mit Kunststoff im In-Mould-Verfahren zu einem Kunststoffformteil (1), sodass das Kunststoffformteil (1) einen Grundkörper sowie die Dekorationsschicht (3) umfasst,
(c) selektive Bestrahlung des Kunststoffformteil im Bereich der Dekorationsschicht (3) mit UV-Laserlicht,
(d) lokale Umwandlung der farblosen Pigmente in farbige Pigmente im Bestrahlungsbereich der Dekorationsschicht (3), wodurch die Farbigmarkierung (7) entsteht.

20. Verfahren nach Anspruch 19, **dadurch gekennzeichnet, dass** die Dekorationsschicht Pigmente enthält, deren Fähigkeit durch Bestrahlung mit UV-Laserlicht einen Farbumschlag zu bewirken, vorher durch eine Erwärmung aktiviert werden muss, verwendet wird und die Aktivierung der Pigmente während der Herstellung der Dekorationsschicht (3) aufgrund der erhöhten Temperatur des Materials der Dekorationsschicht (3) erfolgt.

21. Verfahren nach Anspruch 19, **dadurch gekennzeichnet, dass** die Dekorationsschicht Pigmente erhält, deren Fähigkeit durch die Bestrahlung mit UV-Laserlicht einen Farbumschlag zu bewirken, durch Erwärmung und gleichzeitige UV-Laserlicht-Bestrahlung, aktiviert werden muss, verwendet wird, der Spritzgussmaschine entnommen wird und anschließend das fertiggestellte Kunststoffformteil während des Bestrahlens mit UV-Laserlicht erhitzt wird.

22. Verfahren nach Anspruch 20 oder 21, **dadurch gekennzeichnet, dass** das Kunststoffformteil, zumindest im Bereich der Dekorationsschicht (3), auf eine Temperatur von mindestens 50 - 100°C, vorzugsweise auf 60 - 80°C und besonders vorzugsweise auf 70°C erhitzt wird.

23. Verfahren nach mindestens einem der Ansprüche 19 bis 22, **dadurch gekennzeichnet, dass** es sich bei der Dekorationsschicht (3) um eine In-Mould-Folie handelt.

24. Verfahren nach mindestens einem der Ansprüche 19 bis 23, **dadurch gekennzeichnet, dass** ein UV-Laser mit einer Wellenlänge von 355 nm und/oder einer Impulsdauer im Pikosekunden-Bereich, vorzugsweise 200-400 ps, und/oder einer Wiederholungsrate von mindestens 300 kHz verwendet wird.

25. In-Mould-Folie, insbesondere als Dekorationsschicht für ein Kunststoffformteil nach den Ansprüchen 1-18 oder für den Einsatz in dem Verfahren nach den Ansprüchen 19-26, mit einem Grundkörper oder Matrix sowie fein verteilten Pigmenten, **dadurch gekennzeichnet, dass**
es sich bei den Pigmenten um Pigmente auf Diacetylen-Basis handelt.

26. In-Mould-Folie nach Anspruch 25, **dadurch gekennzeichnet, dass** das Grundmaterial der In-Mould-Folie aus PP besteht.

27. In-Mould-Folie, insbesondere als Dekorationsschicht für ein Kunststoffformteil nach den Ansprüchen 1-18 oder für den Einsatz in dem Verfahren nach den Ansprüchen 19-26, mit einem Grundkörper oder ein Matrix sowie fein verteilten Pigmenten, **dadurch gekennzeichnet, dass** es sich bei den Pigmenten um Pigmente auf Leuco Dye-Basis handelt.

28. In-Mould-Folie nach Anspruch 27, **dadurch gekennzeichnet, dass** das Grundmaterial der In-Mould-Folie aus Polystyrol besteht.
